# EUROPÄISCHE PATENTSCHRIFT

(11) **EP 2 220 531 B1**
(45) Veröffentlichungstag und Bekanntmachung des Hinweises auf die Patenterteilung: **21.09.2011**
(21) Anmeldenummer: 08859108.6
(22) Anmeldetag: 10.12.2008
(51) Int. Cl.: G02B 21/26

(54) **MIKROSKOPISCHES SYSTEM**
MICROSCOPIC SYSTEM
MICROSCOPE

(30) Priorität: 10.12.2007 AT 19942007; 10.12.2007 AT 19952007
(43) Veröffentlichungstag der Anmeldung: 25.08.2010
(73) Patentinhaber: Luttenberger, Herbert, 1040 Wien (AT)
(72) Erfinder: Luttenberger, Herbert, 1040 Wien (AT)
(74) Vertreter: Ellmeyer, Wolfgang
(86) Internationale Anmeldenummer: PCT/AT2008/000441
(87) Internationale Veröffentlichungsnummer: WO 2009/073904

(56) Entgegenhaltungen:
- WO-A-2004/063107
- DE-A1- 19 541 233
- JP-A- 60 168 118
- US-A1- 2002 008 903
- BERLINER GLAS: "Chemisches Härten/ Vorspannen"[Online] 28. Oktober 2007 (2007-10-28), XP002519444 Gefunden im Internet: URL:http://web.archive.org/web/20071028173 704/http://www.berlinerglas.de/htdocs_de/t echnische_glaeser/chemisches_haerten.html> [gefunden am 2009-03-16] -& BERLINER GLAS: "Chemische Härtung"[Online] 28. Oktober 2007 (2007-10-28), Seiten 1-2, XP002519445 online Gefunden im Internet: URL:www.berliner-glas.de/download/chemisch e_haertung.pdf> [gefunden am 2009-03-16]

## Beschreibung

Die Erfindung betrifft ein mikroskopisches System zur Betrachtung eines Objekts, mit einer Optik und einem Arbeitstisch, der eine Arbeitsfläche zum Auflegen des zu betrachtenden Objektes aufweist, wobei die Arbeitsfläche zumindest teilweise durch eine Auflageplatte gebildet ist, die in den Arbeitstisch eingesetzt ist, wobei das Material, aus dem die Auflageplatte gebildet ist, eine höhere Härte als die von Glas aufweist, und wobei ein Leuchtmittel vorgesehen ist, welches Leuchtmittel so mit der Auflageplatte gekoppelt ist, dass zumindest ein Teil der Auflageplatte Licht abstrahlt, um das auf der Auflageplatte aufgelegte Objekt zu beleuchten.

Zur Verbesserung der Oberflächeneigenschaften hinsichtlich Kratzfestigkeit und Beständigkeit gegen äußere Einflüsse sind moderne Mikroskop-Arbeitstische durch Oberflächenbeschichtung geschützt. So hat sich in den letzten Jahren das Vorsehen eines auf seiner Arbeitsfläche keramisch beschichteten Arbeitstisches (ceramic coated stage), insbesondere für die Hochleistungs-Mikroskopie durchgesetzt. Diese Art des Oberflächenschutzes ist aber nicht nur technisch aufwändig und daher teuer, sondern es stellen sich bereits nach kurzer Zeit Abnützungserscheinungen ein, welche die Beschichtung teilweise zum Verschwinden bringen und dabei auch dem Arbeitstisch ein unansehnliches Erscheinungsbild geben. Der Arbeitstisch wird dadurch nur mehr bedingt einsetzbar, da z.B. keine Beständigkeit gegen Korrosionseinflüsse gegeben ist. Ein Austausch des gesamten Arbeitstisches ist aber mit hohen Kosten und Zeitaufwand für die Nachbestellung verbunden.

In der DE 195 41 233 A ist ein Mikroskop angegeben, das mit einem Arbeitstisch ausgestattet ist, der an seiner Oberseite eine transparente Glaskeramik aufweist. Die verwendete Glaskeramik hat eine größere Härte als die von Glas, wodurch ein Zerkratzen dieser Fläche weitgehend vermieden wird. Die Glaskeramikplatte als Auflagefläche für den Arbeitstisch hat sich in der Praxis aber nicht durchgesetzt, weil sie in der Herstellung zu aufwändig ist und eine relativ hohe Dicke aufweisen muss, um ein Zerbrechen zu verhindern. Dadurch ergibt sich aber ein insgesamt zu schwerer Tischaufbau, bei dem die angestrebte Leichtgängigkeit der X-Y-Bewegung nicht erreichbar ist.

Versuche mit anderen Auflageflächen haben kein befriedigendes Ergebnis hinsichtlich der Kratz- und Bruchfestigkeit sowie der leichten Ersetzbarkeit geliefert.

In der US 2002/0008903 A1 ist ein Auflicht-Mikroskop gezeigt, bei dem die Proben auf einem durch Hartglas geschützten flächigen Leuchtmittel aufgelegt werden können und durch eine bekannte Klammer gehalten werden. Das flächige Leuchtmittel dient dabei der direkten Beleuchtung der Probe und nicht der Hintergrundbeleuchtung neben dem Strahlengang.

Aus der Internet-Seite "Chemisches Härten - Berliner Glas Technische Gläser" (XP-002519444) vom 16. März 2006 geht ein chemisch gehärtetes Glas mit hoher Kratzresistenz hervor.

Weiters ist in der DE 10 2005 036397 A1 die Verwendung einer OLED-Schicht zur Durchlichtbeleuchtung in einem Mikroskop vorgeschlagen.

Aufgabe der Erfindung ist es, ein mikroskopisches System der eingangs genannten Art anzugeben, dessen Arbeitstisch gegen die bei Bedienung auftretenden Abnützungserscheinungen geschützt ist, den Herstellungs- und Wartungsaufwand dafür aber niedrig zu halten.

Weitere Aufgabe der Erfindung ist es, eine geeignete Materialauswahl für eine Mikroskop-Arbeitsfläche zu treffen, welche die oben genannten Erfordernisse erfüllt.

Ferner ist es Aufgabe, eine Mikroskop-Arbeitsfläche zu schaffen, die einerseits gut zu reinigen und auf einfache Weise emeuerbar ist sowie andererseits auch auf vorteilhafte Weise beleuchtbar ist.

Erfindungsgemäß wird dies dadurch erreicht, dass
- die Auflageplatte aus chemisch gehärtetem Glas gebildet ist, das eine Härte nach Vickers von größer als 610 HV, vorzugsweise eine Härte nach Vickers im Bereich von 620 bis 630 HV aufweist,
- dass der Arbeitstisch an der dem Objektiv zugewandten Seite eine Vertiefung aufweist, in welche die Auflageplatte einsetzbar ist, wobei die Auflageplatte so in die Vertiefung des Arbeitstisches eingesetzt ist, dass die Auflageplatte in der Vertiefung durch Formschluss gehalten ist und aus dieser durch Anheben entnommen werden kann,
- dass das Leuchtmittel durch eine elektrisch betriebene, aktive Leuchtfolie, die im Arbeitstisch aufgenommen ist, wobei eine lichtaussendende Fläche der aktiven Leuchtfolie einem Bereich der Auflageplatte gegenüberliegt, oder durch eine elektrisch betriebene, auf der Auflageplatte zumindest bereichsweise aufgebrachte Substanz gebildet ist,
- dass die Auflageplatte eine Durchbrechung zum Durchtritt von Licht aufweist.
- dass eine im Arbeitstisch unterhalb der Vertiefung für die Auflageplatte liegende Vertiefung ausgebildet ist, in der die aktive Leuchtfolie eingelegt ist,
und dass die aktive Leuchtfolie oder die aufgebrachte leuchtaktive Substanz sich im Bereich neben der Durchbrechung erstreckt.

Es hat sich gezeigt, dass chemisch gehärtetes Glas im erfindungsgemäßen Härtebereich alle erforderlichen Bedingungen für eine Arbeitsunterlage eines Mikroskop-Arbeitstisches aufweist und zugleich kratzfest und mechanisch beständig ist. Der mit dem chemisch gehärteten Glas der Auflageplatte verbundene Herstellungsaufwand ist dazu geeignet, die Auflageplatte so auszuführen, dass sie leicht gegen eine neue getauscht werden kann.

Hinsichtlich der Form der Auflageplatte besteht im Rahmen der Erfindung keine Einschränkung, zumindest eine Fläche die der Auflage des Objekts dient, ist dabei an die jeweilige Objekthalterung oder -führung anzupassen. Nach dem Feststellen von Abnützungserscheinungen kann die Auflageplatte auf einfache Weise aus dem Arbeitstisch entnommen und durch ein anderes ersetzt werden. Es können aber auch dem jeweilige Anwendungszweck angepasste Auflageplatten gewählt werden.

Die erfindungsgemäß vorgesehene Auflageplatte kann somit nach einigem Gebrauch sehr leicht ausgetauscht werden, wobei die Oberflächeneigenschaften derselben, wie hohe Kratzfestigkeit, chemische Beständigkeit, Biegsamkeit, Bruchfestigkeit od. dgl. die Anforderungen an eine Mikroskop-Arbeitsfläche erfüllen. Wesentlich dabei ist, dass nicht der Arbeitstisch an einer seiner Flächen oberflächenbehandelt sein muss, sondern das separate Auflageelement kann die gewünschten Eigenschaften unabhängig vom Arbeitstisch aufweisen.

Um eine leichte Reinigung der Auflageplatte und ein einfaches Austauschen derselben zu ermöglichen, ist die Auflageplatte so in die Vertiefung des Arbeitstisches eingesetzt, dass die Auflageplatte in der Vertiefung durch Formschluss gehalten ist und aus dieser durch Anheben entnommen werden kann.

Das Leuchtmittel ist so mit der Auflageplatte des Arbeitstisches gekoppelt, dass zumindest ein Teil der Auflageplatte Licht abstrahlt, um das auf der Auflageplatte aufgelegte Objekt zu beleuchten.

Es bietet sich dem Anwender der Vorteil einer zumindest teilweise leuchtenden kontrastreichen Arbeitsfläche, die durch die chemisch gehärtete Auflageplatte gebildet ist, auf welche die Proben, Objektträger oder Präparate aufgelegt werden können, während bei herkömmlichen Arbeitstischen die Arbeitsfläche einen dunklen, kontrastlosen Untergrund bereitstellt. Die Vorselektion, Markierung, Inspektion, Vordefinition oder der Vergleich mit anderen Objekten wird erheblich erleichtert und optimiert, wodurch ein schnelleres und effizientes Arbeiten erreicht werden kann. Das auf diese Weise erreichte, gleichmäßige, homogene Ausstrahlen von Licht durch einen Bereich der Auflageplatte des Arbeitstisches ermöglicht die Beleuchtung des Objektes und damit die Vorselektion bzw. das Lokalisieren desselben auf einem Objektträger unmittelbar neben der optischen Achse des mikroskopischen Systems. Der Anwender kann somit das zu betrachtende Objekt zunächst auf die leuchtende Arbeitsfläche auflegen und mit Hilfe des daraus sich ergebenden Kontrastes mit freiem Auge betrachten. Sobald er die Position des Objektes bzw. Präparates auf dem Objektträger festgestellt hat, kann er nun den Objektträger durch Verschieben in eine mit der optischen Achse des erfindungsgemäßen mikroskopischen Systems übereinstimmende Lage bringen und dann die Beobachtung durch das mikroskopische System hindurch beginnen. Damit vereinfacht sich der Vorgang der Vorselektion bedeutend. Der Licht aussendende Teil der Arbeitsfläche stellt somit einen leuchtenden Bereich zur makrovisuellen Inspektion und Beurteilung von Objekten dar, um sie danach dem Mikroskopiervorgang zuzuführen. Es können beispielsweise auch mehrere Objektträger auf dem leuchtenden Bereich der Arbeitsfläche nebeneinander gelegt werden, um sie zu vorab zu begutachten, bzw. dadurch effizient mögliche makroskopische Vergleiche anzustellen.

Das Leuchtmittel sollte eine möglichst gleichmäßig über die betreffende Fläche verteilte Lichtaussendung bewirken, um unabhängig von der Position eine gleich starke Beleuchtung des Objekts von unten zu ermöglichen. Zu diesem Zweck kann das Leuchtmittel durch eine elektrisch betriebene, aktive Leuchtfolie gebildet sein, die im Arbeitstisch aufgenommen ist, wobei eine lichtaussendende Fläche der aktiven Leuchtfolie einem Bereich der Arbeitsfläche gegenüberliegt, um das von der Leuchtfolie erzeugte Licht in die Auflageplatte einzubringen und diese Licht ausstrahlen zu lassen.

Diese Art der Lichtquelle weist keinen Glühfaden auf und ist daher im Betrieb robust, weil sie stoßfest und vibrationsbeständig ist.

Weiters weist die aktive Leuchtfolie keinen UV-Anteil auf, weshalb sie augen- und objektschonend einsetzbar ist. Durch das Fehlen infraroter Emission entsteht keine

Eigenerwärmung und damit keine Erwärmung des auf der Arbeitsfläche aufgelegten Objektes.

Das erfindungsgemäße Leuchtmittel ist so im Arbeitstisch ausgebildet, das es die auf die Auflageplatte aufgelegten Objekte von unten anstrahlt.

Die Auflageplatte ist in eine Vertiefung des Arbeitstisches eingesetzt ist, und eine im Arbeitstisch tieferliegende Vertiefung ist ausgebildet, in der die aktive Leuchtfolie eingelegt ist. Die tiefergelegte aktive Leuchtfolie ist somit durch die Auflageplatte gegen eine mechanische Belastung geschützt.

Die Auflageplatte kann auch nur bereichsweise Licht abstrahlen, wenn dieser Bereich ausreicht, um Objekte, z. B. auf einem Objektträger aufzulegen und vorab mit freiem Auge zu betrachten.

Eine bevorzugte Ausführungsform der Erfindung besteht darin, dass die Auflageplatte eine Härte nach Vickers von 626 HV aufweist. Bei diesem Wert der Härte haben sich die besten Ergebnisse für Kratzfestigkeit und mechanische Beständigkeit erzielen lassen.

Ein weiteres Ausführungsbeispiel der Erfindung kann darin bestehen, dass die Auflageplatte eine Biegefestigkeit von 150 N/mm² aufweist. Ein derartiger Wert der Biegefestigkeit verhindert ein allzu rasches Brechen der Auflageplatte bei ihrer Handhabung.

Es hat sich weiters als vorteilhaft erwiesen, wenn die Auflageplatte eine Kugel-Schlagfestigkeit von 4 bis10 Joule aufweist, um die erforderliche Robustheit während des Gebrauchs zu gewährleisten.

(Weiter auf Seite 7 der ursprünglichen Beschreibung)

Nachfolgend wird die Erfindung anhand des in den Zeichnungen dargestellten Ausführungsbeispiels eingehend erläutert. Es zeigt dabei
Fig. 1 eine Draufsicht auf einen Arbeitstisch gemäß einer Ausführungsform des erfindungsgemäßen mikroskopischen Systems;
Fig. 2 eine Draufsicht auf ein flächiges Auflageelement des erfindungsgemäßen mikroskopischen Systems gemäß Fig. 1;
Fig. 3 einen Schnitt BB durch das flächige Auflageelement gemäß Fig. 2;
Fig. 4 einen Schnitt AA durch das flächige Auflageelement gemäß Fig. 2;
Fig. 5 eine teilweise Schrägrißdarstellung des erfindungsgemäßen mikroskopischen Systems gemäß Fig. 1;
Fig. 6 einen schematischen Querschnitt durch den Arbeitstisch des Mikroskops gemäß Fig. 1 und durch das eingelegte Auflageelement;
Fig. 7 eine Draufsicht auf einen Arbeitstisch einer weiteren Ausführungsform des erfindungsgemäßen mikroskopischen Systems;
Fig. 8 einen Schnitt durch eine seitliche Schrägansicht des mikroskopischen Systems gemäß Fig. 7;
Fig. 9 einen vereinfachten, schematischen Längsschnitt durch den Arbeitstisch gemäß Fig. 8 und
Fig. 10 einen schematischen Längsschnitt durch einen Arbeitstisch einer weiteren Ausführungsform des mikroskopischen Systems.

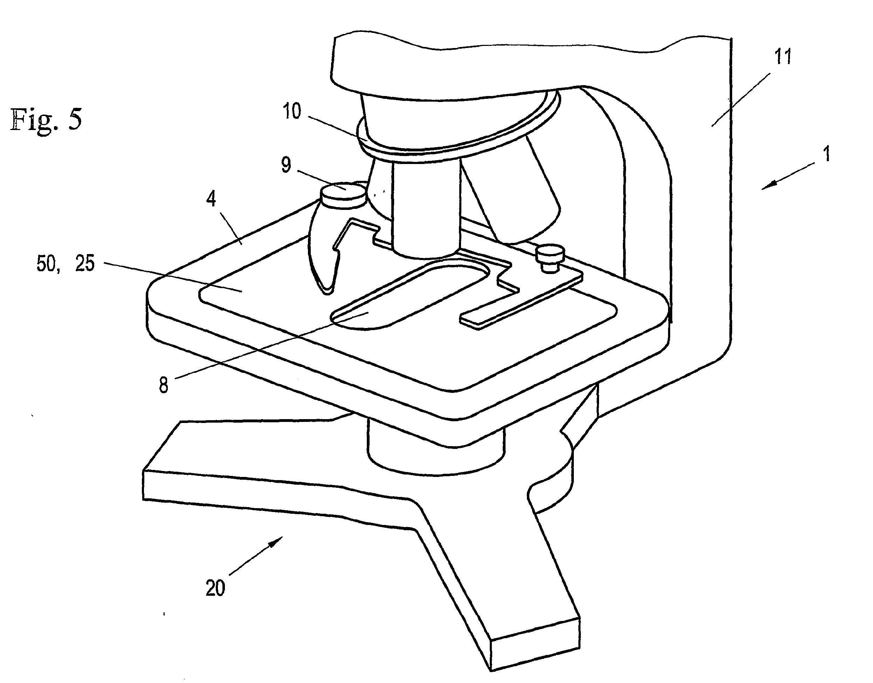

Fig. 5 zeigt ein mikroskopisches System zur Betrachtung eines nicht dargestellten Objekts. Im gezeigten Beispiel ist ein Standard-Lichtmikroskop 1 für den Durchlicht-Betrieb mit einem Arbeitstisch 4 ausgestattet. Die Erfindung ist aber auch auf andere, dem Fachmann bekannte mikroskopische Systeme anwendbar.

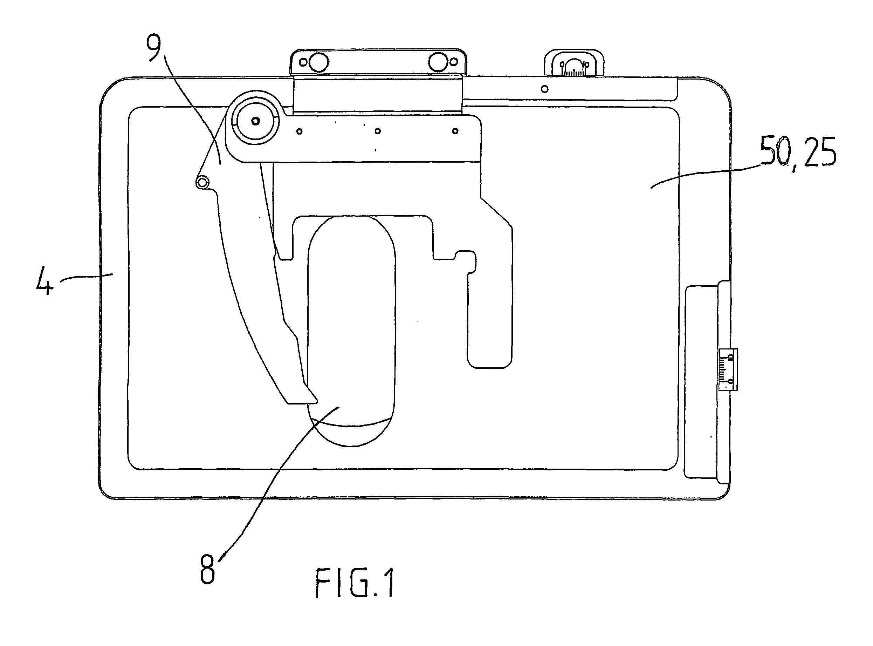

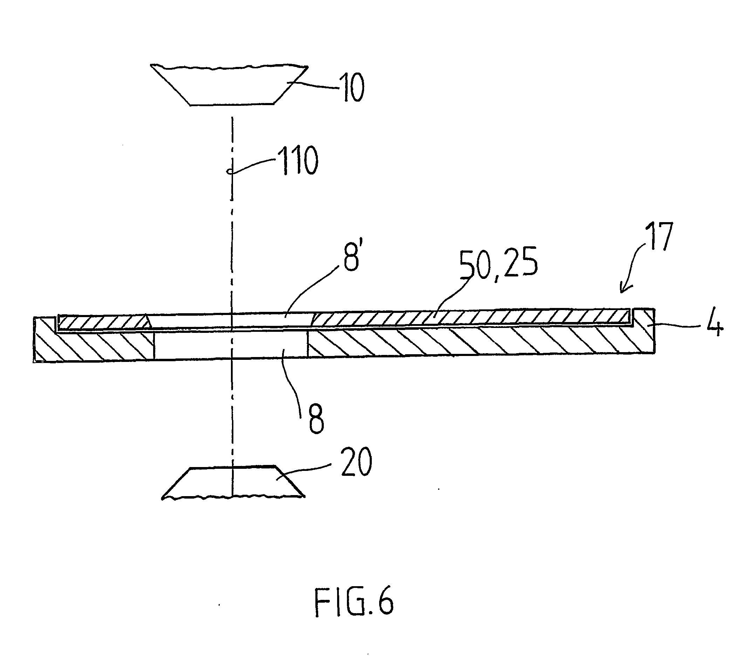

Objektive 10 als Teil einer Optik sind von einem Stativ 11 gehalten. Im Verlauf der optischen Achse 110 (Fig. 6) des Standard-Lichtmikroskops 1 ist unterhalb des Arbeitstisches 4 ein Kondensor 20 angeordnet, über den Licht durch ein Langloch 8 (Fig.1) des Arbeitstisches 4 in eines der Objektive 10 gelangt. Das Langloch 8 ermöglicht eine Bewegung des Arbeitstisches 4 in dessen Ebene entlang der Langloch-Hauptachse ohne Behinderung des Lichtstrahles über eine Mechanik. Die Ausführung der Optik kann in Abhängigkeit vom Anwendungsfall unterschiedlich sein, schränkt aber den Anwendungsbereich der Erfindung keineswegs ein. Über einen X-Y-Objektführer 9 (Fig.1) können Objekte, z.B. Präparate auf einem Objektträger gehalten und auf dem Arbeitstisch 4 verschoben werden.

Der Arbeitstisch 4 weist eine Arbeitsfläche 50 zum Auflegen des zu betrachtenden Objektes auf. Die Arbeitsfläche 50 ist durch eine Auflageplatte 25 gebildet, die in den Arbeitstisch 4 eingesetzt ist. Die Auflageplatte könnte aber auch auf den Arbeitstisch 4 aufgesetzt oder mit diesem, z.B. durch eine Verschraubung verbunden sein. Aufgrund der separaten Ausbildung ist die Auflageplatte 25 leicht austauschbar und kann den Erfordernissen entsprechend gestaltet sein. Die Auflageplatte 25 ist somit nicht Teil des Arbeitstisches 4.

Erfindungsgemäß ist die Auflageplatte 25 aus chemisch gehärtetem Glas gebildet, das eine Härte nach Vickers von größer als 610 HV, vorzugsweise eine Härte nach Vickers im Bereich von 620 bis 630 HV aufweist. In der nachfolgenden Tab.1 sind Eigenschaften einer beispielhaft angegebenen, erfindungsgemäßen Auflageplatte 25 im Vergleich zu unbehandeltem Glas enthalten.

**Tab. 1 Eigenschaften von chemisch gehärtetem Glas im Vergleich zu unbehandeltem Glas**

| | **Chemisch gehärtetes Glas** | **Unbehandeltes Glas** |
|---|---|---|
| Schlagfestigkeit (mit Kugel) | 4 -10 Joule (je nach 1-2 Joule Testbedingungen) | (1 Joule = 1 N*m) |
| Biegefestigkeit σ bB: (entsprechend EN 12337) | 150 N/mm² 150 N/mm² | 50 N/mm² 50 N/mm² |
| | 350°C für 1 mm Glas | 170°C für 1 mm Glas |
| Temperaturwechselbeständigkeit | 300°C für 2 mm Glas | 130°C für 2 mm Glas |
| nach DIN 52313 | 270°C für 3 mm Glas | 120°C für 3 mm Glas |
| | 250°C für 4 mm Glas | 100°C für 4 mm Glas |
| Härte nach Vickers | 626 HV 0,2/15 | 550 HV 0,2/15 |
| Einsatztemperatur | 300°C * | 450°C |

In noch bevorzugter Weise hat die Auflageplatte 25 eine Härte nach Vickers von 626 HV.

Weiters hat die Auflageplatte 25 eine Biegefestigkeit in einem Bereich von 130 bis 170 N/mm² , vorzugsweise von 150 N/mm².

Eine weitere Materialeigenschaft der Auflageplatte 25 besteht darin, dass eine Kugel-Schlagfestigkeit in einem Bereich von 4 bis 10 Joule vorliegt.

Die Dicke der Auflageplatte 25 ist z.B. mit 1,3 mm +/- 0,1 mm gewählt, welche im bevorzugten Bereich der Dicke von 1,2 mm bis 1,5 mm liegt, der eine ausreichende Festigkeit und Kratzbeständigkeit der Auflageplatte 25 ermöglicht, dennoch aber die erforderliche Biegsamkeit ermöglicht, damit diese beim Austausch oder bei Belastung bricht. Aufgrund der relativ geringen Dicke kann die Auflageplatte 25 in übliche Arbeitstische eingesetzt werden. Es muss also keine Verstärkung des Arbeitstisches vorgenommen werden.

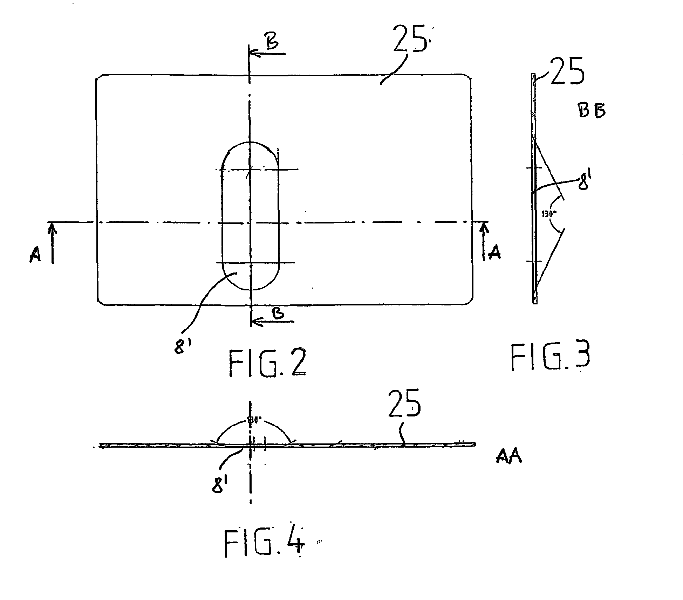

Gemäß Fig. 1 ist die Auflageplatte 25 durch eine rechteckige, planparallele Platte aus gehärtetem Glas mit gerundeten Eckbereichen gebildet, welche transparent oder zumindest teilweise transparent ist. Die verwendete Auflageplatte 25 ist in Fig.2, 3 und 4 nochmals ohne Arbeitstisch 4 dargestellt.

Die Auflageplatte 25 kann für unterschiedliche Mikroskop-Modelle in verschiedenen Größen ausgeführt sein, sie wird nach extremer Beanspruchung und Verschleiß gegen eine neue getauscht oder gereinigt.

Weiters kann die Auflageplatte 25 mit unterschiedlichen Eigenschaften ausgebildet sein, sie kann z.B. auf einer Seite mit einer geätzten Oberfläche versehen sein.

Als Sicherheitsmaßnahme kann die Auflageplatte 25 aus Sicherheitsglas sein, das auf einer Seite eine Sicherheitsfolie aufweist, welche bei Bruch Splitter zusammenhält.

Der Arbeitstisch 4 weist an der dem Objektiv zugewandten Seite eine Vertiefung 17 (Fig.6) auf, in welche die Auflageplatte 25 einsetzbar ist. Diese ist so in die Vertiefung 17 des Arbeitstisches 4 passend eingesetzt, dass die Auflageplatte 25 in der Vertiefung 17 nur durch Formschluss, d.h. ohne Krafteinwirkung, gehalten ist und aus dieser durch Anheben entnommen werden kann. Durch geeignete Wahl der Fertigungstoleranzen verbleibt die Auflageplatte 25 während der Benutzung des Mikroskops in der Vertiefung 17. Die Auflageplatte 25 kann ohne Lösen einer Schraubverbindung oder einer sonstigen Verbindungsart aus der Vertiefung 17 entnommen und z.B. gereinigt oder ausgetauscht werden. Dies erfolgt mit wenigen Handgriffen, wobei ein Finger des Benutzers in das Langloch 8 gesteckt werden kann, um die Auflageplatte 25 aus der Vertiefung 17 zu entnehmen, und wird daher nicht als störend empfunden.

Bei einer invertierten Ausführungsform des erfindungsgemäßen optischen Systems wäre das Objekt 10 entsprechend auf der Unterseite und der Kondensor 20 auf der Oberseite des Arbeitstisches 4 angeordnet. Entsprechend wäre die Vertiefung 17 in diesem Fall an der dem Objektiv 10 abgewandten Seite des Arbeitstisches 4 vorgesehen.

Entsprechend dem Langloch 8 im Arbeitstisch 4 ist in der Auflageplatte 25 eine Durchbrechung 8' zum Durchtritt von Licht vorgesehen.

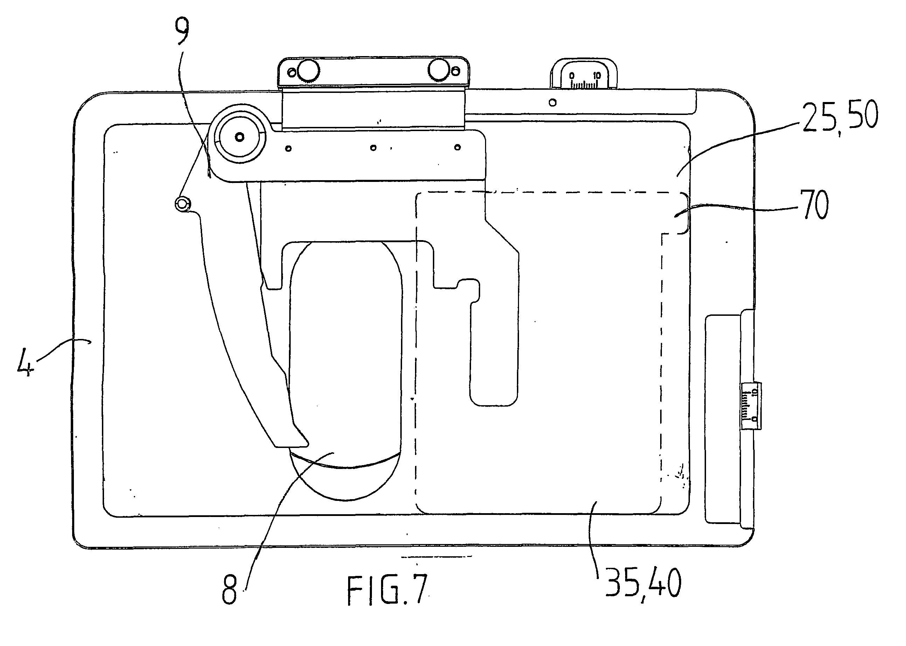

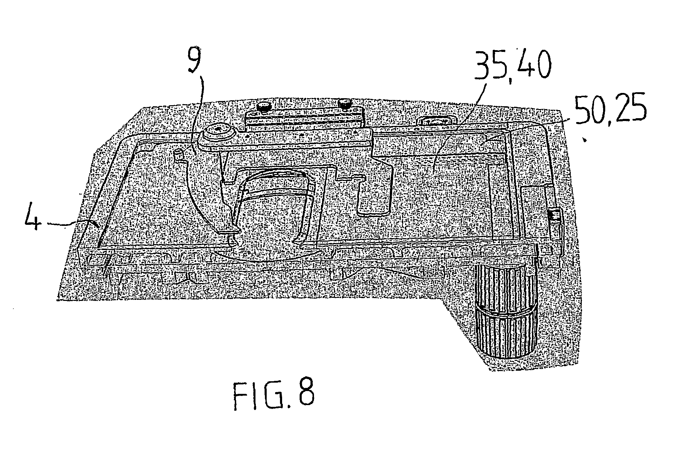

Im Ausführungsbeispiel gemäß Fig. 7 und Fig.8 ist ein Leuchtmittel 35 vorgesehen, das so mit der Arbeitsfläche 50 des Arbeitstisches 4 gekoppelt ist, dass zumindest ein Teil der Arbeitsfläche 50 Licht abstrahlt, um das auf der Arbeitsfläche 50 aufgelegte Objekt zu beleuchten.

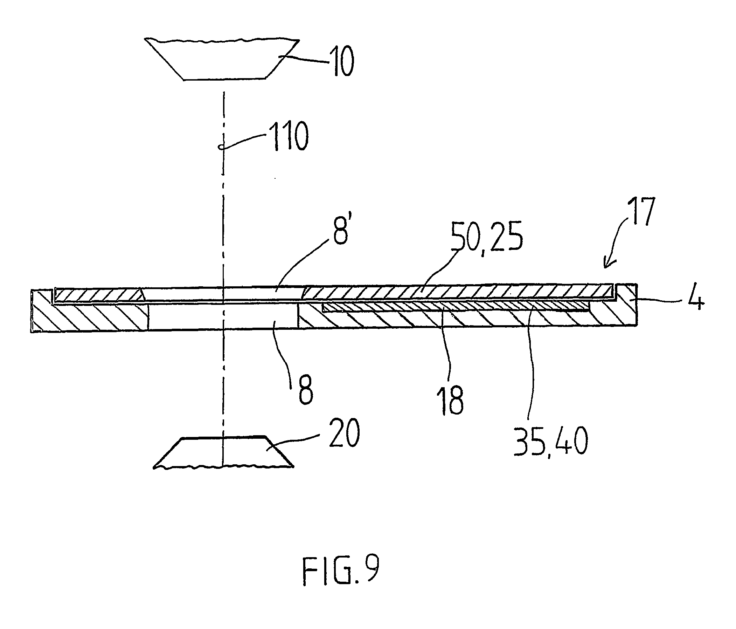

Das Leuchtmittel 35 ermöglicht eine Vorselektion des Objektes und ist durch eine elektrisch betriebene, aktive Leuchtfolie 40 gebildet, die im Arbeitstisch 4 aufgenommen ist, wobei eine lichtaussendende Fläche der aktiven Leuchtfolie 40 einem Bereich der Arbeitsfläche 50 gegenüberliegt (Fig.9). Bei der aktiven Leuchtfolie 40, welche im Handel erhältlich ist, ist ein Leuchtmedium, z.B. Zinksulfat, auf eine metallisierte, transparente Polyesterfolie aufgebracht und mit einer Isolierschicht sowie mit einer Rückelektrode bedruckt. Über eine seitlich ausgebildete Kontaktzone 70 ist die für den Betrieb erforderliche Verbindung mit einer (nicht dargestellten) Spannungsquelle ausgebildet. Die Isolierung der Leuchtfolie 40 kann durch ein geeignetes Laminat erfolgen.

Die aktive Leuchtfolie 40 ist in einer im Arbeitstisch 4 tieferliegend ausgebildeten Vertiefung 18 eingelegt (Fig.9).

Wie in Fig. 9 gezeigt, weist die Auflageplatte 25 die Durchbrechung 8' für den Lichtdurchtritt der Mikroskop-Optik auf, wobei die aktive Leuchtfolie 40 sich im Bereich neben der Durchbrechung 8' erstreckt.

Die gesonderte aktive Leuchtfolie 40 kann aber auch durch eine auf der Auflageplatte 25 aufgebrachte, vorzugsweise aufgedruckte aktive Leuchtschicht ersetzt werden, die ebenfalls mit Strom betrieben werden kann. Weitere andere mögliche Leuchtmittel sind dem Fachmann bekannt und können für den erfindungsgemäße Zweck eingesetzt werden.

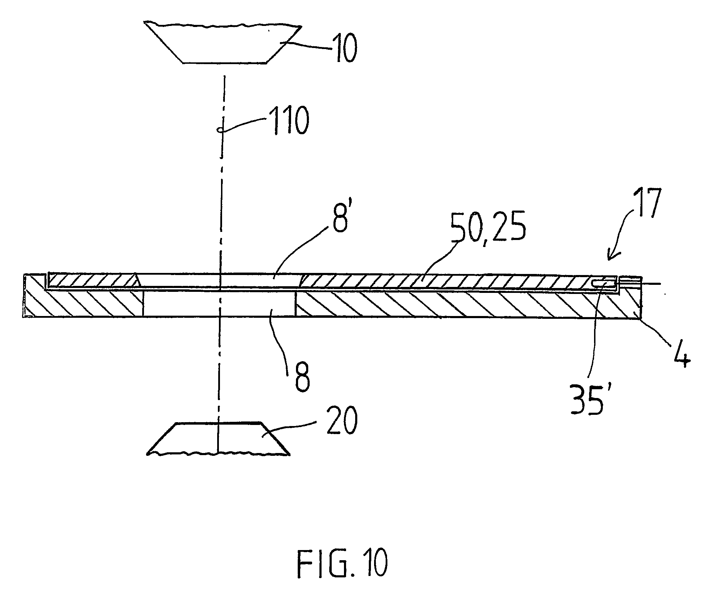

Fig. 10 zeigt ein Ausführungsbeispiel, dem gemäß das Leuchtmittel durch eine oder mehrere LED 35' gebildet ist, wobei die LED 35' in einer Stirnseite der Arbeitsfläche 50 eingebettet ist oder sind, die aus der Auflageplatte 25 gebildet ist. Die LED-Anschlüsse sind seitlich durch eine Bohrung im Tisch 4 hindurch nach außen geführt.

Durch das stirnseitige Einleiten von Licht strahlt die Auflageplatte 25 Licht in Richtung des Objektivs 10 ab und dient der Beleuchtung des Objekts von unten.

## Patentansprüche

1. Mikroskopisches System zur Betrachtung eines Objekts, mit einer Optik und einem Arbeitstisch (4), der eine Arbeitsfläche (50) zum Auflegen des zu betrachtenden Objektes aufweist, wobei die Arbeitsfläche (50) zumindest teilweise durch eine Auflageplatte (25) gebildet ist, die in den Arbeitstisch (4) eingesetzt ist, wobei das Material, aus dem die Auflageplatte (25) gebildet ist, eine höhere Härte als die von Glas aufweist, und wobei ein Leuchtmittel (35, 35') vorgesehen ist, welches Leuchtmittel (35, 35') so mit der Auflageplatte (25) gekoppelt ist, dass zumindest ein Teil der Auflageplatte (25) Licht abstrahlt, um das auf der Auflageplatte (25) aufgelegte Objekt zu beleuchten, **dadurch gekennzeichnet, dass**
- die Auflageplatte (25) aus chemisch gehärtetem Glas gebildet ist, das eine Härte nach Vickers von größer als 610 HV, vorzugsweise eine Härte nach Vickers im Bereich von 620 bis 630 HV aufweist,
- dass der Arbeitstisch (4) an der dem Objektiv zugewandten Seite eine Vertiefung (17) aufweist, in welche die Auflageplatte (25) einsetzbar ist, wobei die Auflageplatte (25) so in die Vertiefung (17) des Arbeitstisches (4) eingesetzt ist, dass die Auflageplatte (25) in der Vertiefung (17) durch Formschluss gehalten ist und aus dieser durch Anheben entnommen werden kann,
- dass das Leuchtmittel (35, 35') durch eine elektrisch betriebene, aktive Leuchtfolie (40), die im Arbeitstisch (4) aufgenommen ist, wobei eine lichtaussendende Fläche der aktiven Leuchtfolie (40) einem Bereich der Auflageplatte (25) gegenüberliegt, oder durch eine elektrisch betriebene, auf der Auflageplatte zumindest bereichsweise aufgebrachte Substanz gebildet ist,
- dass die Auflageplatte (25) eine Durchbrechung zum Durchtritt (8') von Licht aufweist.
- dass eine im Arbeitstisch (4) unterhalb der Vertiefung (17) für die Auflageplatte (25) liegende Vertiefung (18) ausgebildet ist, in der die aktive Leuchtfolie (40) eingelegt ist,
und dass die aktive Leuchtfolie (40) sich im Bereich neben der Durchbrechung (8') erstreckt.

2. Mikroskopisches System nach Anspruch 1, **dadurch gekennzeichnet, dass** die Auflageplatte (25) eine Härte nach Vickers von 626 HV aufweist.

3. Mikroskopisches System nach Anspruch 1 oder 2, **dadurch gekennzeichnet, dass** die Auflageplatte (25) eine Biegefestigkeit von 150 N/mm² aufweist.

4. Mikroskopisches System nach Anspruch 1, 2 oder 3, **dadurch gekennzeichnet, dass** die Auflageplatte (25) eine Kugel-Schlagfestigkeit von 4 bis10 Joule aufweist.

5. Mikroskopisches System nach einem der Ansprüche 1 bis 4, **dadurch gekennzeichnet, dass** die Auflageplatte (25) rechteckförmig ist.

6. Mikroskopisches System nach Anspruch 1, **dadurch gekennzeichnet, dass** die aufgebrachte Substanz aufgedruckt ist.

## Claims

1. A microscope system for observing an object, comprising a lens system and a work table (4) having a work surface (50) onto which the object to be observed is put, said work surface (50) being formed at least partially by a supporting plate (25) which is inserted into said work table (4), the material of which said supporting plate (25) is formed having a higher hardness than glass, and a lighting means (35, 35') being provided, said lighting means (35, 35') being coupled to said supporting plate (25) in a way that at least a part of said supporting plate (25) emits light in order to illuminate the object put onto said supporting plate (25), **characterised in that**
- said supporting plate (25) consists of chemically strengthened glass with a Vickers hardness of more than 610 HV, preferably with a Vickers hardness in the range from 620 to 630 HV,
- said work table (4) has a recess (17) on the side facing the lens system into which said supporting plate (25) may be inserted, said supporting plate (25) being inserted into said recess (17) of the work table (4) in a way that said supporting plate (25) is positively engaged within the recess (17) and may be taken out of said recess by simply lifting it,
- said lighting means (35, 35') is formed by an electrically operated, active luminous film (40) which is received in the work table (4), a light-emitting surface of said luminous film (40) being opposed to an area of said supporting plate (25), or by an electrically operated substance which is disposed at least in some areas of said supporting plate,
- said supporting plate (25) has a through-hole (8') for the penetration of light,
- a recess (18) into which said active luminous film (40) is inserted is formed in the work table (4) below said recess (17) for said supporting plate (25),
and **in that** said active luminous film (40) extends in the area next to the through hole (8').

2. The microscope system according to claim 1, **characterised in that** said supporting plate (25) has a Vickers hardness of 626 HV.

3. The microscope system according to claim 1 or claim 2, **characterised in that** said supporting plate (25) has a bending strength of 150 N/mm².

4. The microscope system according to any one of the claims 1, 2, or 3, **characterised in that** said supporting plate (25) has a ball impact resistance from 4 to 10 J.

5. The microscope system according to any one of the claims 1 to 4, **characterised in that** said supporting plate (25) is rectangular.

6. The microscope system according to claim 1, **characterised in that** the substance which is disposed on said supporting plate (25) is printed onto it.

## Revendications

1. Système microscopique pour l'observation d'un objet, comprenant un objectif et une platine porte-objet (4) qui a une surface de travail (50) sur laquelle l'objet à observer est déposé, ladite surface de travail (50) étant au moins partiellement formée par une plaque de support (25) insérée dans la platine porte-objet (4), la matière dont ladite plaque de support (25) consiste ayant une dureté plus grande que celle de verre et un moyen lumineux (35, 35') étant prévu, ledit moyen lumineux (35, 35') étant relié à ladite plaque de support (25) de manière qu'au moins une partie de ladite plaque de support (25) rayonne pour éclairer l'objet mis sur la plaque de support (25), **caractérisé en ce**
- **que** ladite plaque de support (25) consiste en verre qui a été chimiquement trempé avec une dureté Vickers de plus de 610 HV, de préférence avec une dureté Vickers de 620 à 630 HV,
- **que** ladite platine porte-objet (4) a un évidement (17) sur le côté orienté vers l'objectif dans lequel la plaque de support (25) peut être insérée, ladite plaque de support (25) étant insérée dans ledit évidemment (17) de la platine porte-objet (4) de manière qu'elle y est tenue par engagement positif et peut en être enlevée simplement par être soulevée,
- **que** le moyen lumineux (35, 35') est formé par une feuille lumineuse active (40) qui est actionnée à l'électricité et qui est logée dans la platine porte-objet (4), une surface rayonnante de ladite feuille lumineuse active (40) étant disposée vis-à-vis d'un secteur de la plaque de support (25), ou par une substance qui est actionnée par l'électricité et appliquée au moins sur certains secteurs de la plaque de support,
- **que** ladite plaque de support (25) a un orifice (8') pour laisser passer de la lumière,
- **qu'**un évidement (18), dans lequel la feuille lumineuse active (40) est placée, est formé dans la platine porte-objet (4) au-dessous dudit évidement (17) pour la plaque de support (25),
et en ce que ladite feuille lumineuse active (40) s'étend sur une partie à côté dudit orifice (8').

2. Système microscopique selon la revendication 1, **caractérisé en ce que** ladite plaque de support (25) a une dureté Vickers de 626 HV.

3. Système microscopique selon la revendication 1 ou 2, **caractérisé en ce que** ladite plaque de support (25) a une résistance au pliage de 150 N/mm².

4. Système microscopique selon la revendication 1,2 ou 3, **caractérisé en ce que** ladite plaque de support (25) a une résistance aux impacts de balles de 4 à 10 joules.

5. Système microscopique selon l'une des revendications 1 à 4, **caractérisé en ce que** ladite plaque de support (25) est rectangulaire.

6. Système microscopique selon la revendication 1, **caractérisé en ce que** la substance appliquée sur la plaque de support (25) y est imprimée.
